# EUROPEAN PATENT APPLICATION

(11) **EP 2 806 670 A1**
(43) Date of publication of application: **26.11.2014**
(21) Application number: 13360008.0
(22) Date of filing: 21.05.2013
(51) Int. Cl.: H04W 8/00

(54) **Method of device discovery for device-to-device communication in a telecommunication network, user equipment device and computer program product**

(71) Applicant: ALCATEL LUCENT, 92100 Boulogne-Billancourt (FR)
(72) Inventor: Casati, Alessio, Green, Westlea, Swindon., Wiltshire SN5 7DJ (GB)
(74) Representative: Greenwood, Matthew David

(57) **Abstract**

A method of device discovery for device-to-device communication in a telecommunication network, comprising transmitting, from a first device, a discovery request including a first proximity services identifier linked with the first device using a proximity services discovery channel for reception directly at a second device, receiving at the first device over the proximity services discovery channel, directly from the second device, a response to the discovery request including a second proximity services identifier linked with the second device.

## Description

### TECHNICAL FIELD

Example embodiments relate in general to a wireless telecommunication system and more specifically to device-to-device discovery and communication.

### BACKGROUND

Major effort has been spent in recent years on the development of next generation wireless communication systems that will bring higher data rates and system capacity to end users and network operators. Examples of such next generation systems are 3GPP Long Term Evolution (LTE)and WiMAX.

In addition to the typical performance objectives, such as increasing data rates and improving coverage, next generation wireless communication systems are also enabling new services for end users.

For example, direct connectivity services in the form of device-to-device communication (hereinafter, also referred to as D2D communication), which is a communication method that performs direct data transmission and reception between two adjacent devices, not via a base station, is of interest.

There are multiple use cases for efficiently utilizing such device-to-device communication. For example, a device can access a serving cell to perform phone calls and access the Internet using an existing cellular link while also being able to directly transmit and receive large amounts of data, such as to and from a local media server or other device that is operating in a D2D communication link for example.

### SUMMARY

According to an aspect, there is provided a method of device discovery for device-to-device communication in a telecommunication network, comprising transmitting, from a first device, a discovery request including a first proximity services identifier linked with the first device using a proximity services discovery channel for reception directly at a second device, and receiving at the first device over the proximity services discovery channel, directly from the second device, a response to the discovery request including a second proximity services identifier linked with the second device.

A proximity services identifier linked with a device may be provided to that device at the point of attach of the device to the telecommunication network, or is preconfigured for that device. A discovery request may be addressed to a group of devices. The devices may be associated with a specific group identifier relating to a device application. The devices may be associated with multiple group identifiers relating to multiple device applications. The method may further comprise the step of establishing a direct communication link between the first and second devices.

The method may further comprise the steps of transmitting, from the first device, a device-to-device communication request including the first proximity services identifier and using the second proximity services identifier as an address for the request, acknowledging the request of the first device by transmitting, from the second device, an acknowledgement including the second proximity services identifier to the first device using the first proximity services identifier as an address for the acknowledgement.

An authorization request may be transmitted for device-to-device communication from one or both of the first and second devices to a respective base station of the network associated with the device, the authorization request including data representing telecommunication network coverage of the devices. The authorization request may be transmitted from the base station to a mobility management entity, device-to-device communication may be authorised. Authorizing device-to-device communication may include providing a set of transmission parameters to regulate the communication between the devices. The transmission parameters may include cryptographic data for use by the devices to secure device-to-device communication, and/or data relating to a frequency and/or a power range or maximum power level of operation. The transmission parameters may include data representing an allowed data volume quota for the device-to-device transmission.

According to an aspect, there is provided a method for device-to-device communication in a telecommunication network, comprising discovering a set of potential peers in the network using a targeted or non-targeted detection process, establishing a link with a device within the set in order perform a handshake to authorize device-to-device communication, and on the basis of the handshake, communicating directly with the device.

According to an aspect, there is provided user equipment device operable in accordance with the above-described method.

According to an aspect, there is provided a computer program product, comprising a computer usable medium having computer readable program code embodied therein, said computer readable program code adapted to be executed to implement a method for device discovery for device-to-device communication in a telecommunication network as provided in the above-described method.

### BRIEF DESCRIPTION OF THE DRAWINGS

Embodiments will now be described, by way of example only, with reference to the accompanying drawings, in which:
Figure 1 is a schematic block diagram of a wireless cellular network;
Figure 2 is a schematic block diagram showing device-to-device communication based on a cellular communication network such as that shown in figure 1;
Figure 3 is a schematic diagram of an example message flow for a targeted discovery process between a pair of devices;
Figure 4 is a schematic diagram of an example message flow for a non-targeted discovery process between a pair of devices;
Figure 5 is a schematic diagram of an example message flow between a pair of devices;
Figure 6 is a schematic diagram of a further example message flow between a pair of devices;
Figure 7 is a schematic diagram of a further example message flow between a pair of devices; and
Figure 8 is a schematic diagram of an architecture for direct communications establishment.

### DESCRIPTION OF EXAMPLE EMBODIMENTS

Example embodiments are described below in sufficient detail to enable those of ordinary skill in the art to embody and implement the systems and processes herein described. It is important to understand that embodiments can be provided in many alternate forms and should not be construed as limited to the examples set forth herein.

Accordingly, while embodiments can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included. Elements of the example embodiments are consistently denoted by the same reference numerals throughout the drawings and detailed description where appropriate.

The terminology used herein to describe embodiments is not intended to limit the scope. The articles "a," "an," and "the" are singular in that they have a single referent, however the use of the singular form in the present document should not preclude the presence of more than one referent. In other words, elements referred to in the singular can number one or more, unless the context clearly indicates otherwise. It will be further understood that the terms "comprises," "comprising," "includes," and/or "including," when used herein, specify the presence of stated features, items, steps, operations, elements, and/or components, but do not preclude the presence or addition of one or more other features, items, steps, operations, elements, components, and/or groups thereof.

Unless otherwise defined, all terms (including technical and scientific terms) used herein are to be interpreted as is customary in the art. It will be further understood that terms in common usage should also be interpreted as is customary in the relevant art and not in an idealized or overly formal sense unless expressly so defined herein.

A device used in the specification can be referred to as a device, terminal, mobile station (MS), a user equipment (UE), a user terminal (UT), a wireless terminal, an access terminal (AT), a terminal, a subscriber unit, a subscriber station (SS), a wireless device, a wireless communication device, a wireless transmit/receive unit (WTRU), a mobile node, a mobile, or the other terms. Various embodiments of the device can include a cellular phone, a smart phone having a wireless communication function, a personal digital assistant (PDA) having a wireless communication function, a wireless modem, a portable computer having a wireless communication function, a capturing device such as a digital camera having wireless communication function, a game device having a wireless communication function, a music storage and replay appliance having a wireless communication function, an Internet appliance enabling wireless Internet access and browsing, and terminals or a portable unit having combinations of the functions. Other alternatives are possible.

A base station used in the specification is a part of a telecommunication network that is generally fixed or moved to communicate with terminals or devices, and can be a term that indicates the collective name for a base station, a node-B, an eNode-B, a base transceiver system, an access point, a relay, a femto cell, etc.

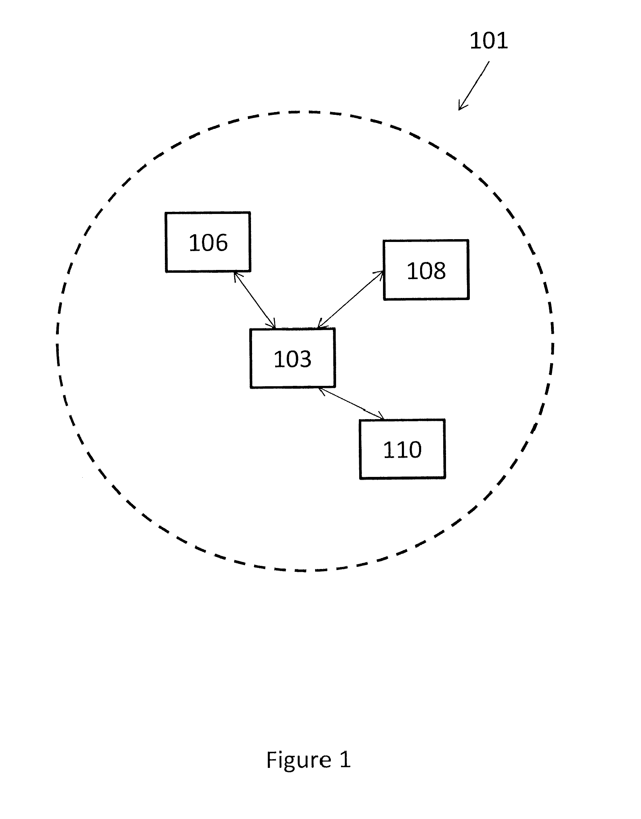

Figure 1 is a schematic block diagram of a wireless cellular network 101 according to an example embodiment including an evolved Node Bs (eNBs) or base station (BS) 103 and devices (user equipment (device) or mobile stations (MSs)) 106, 108, 110. Each device 106, 108, 110 can be associated with BS 103, and can transmit data in an uplink direction to and receive data in a downlink direction from BS 103. It will be appreciated that, although only one BS 103 and three mobile devices (106, 108 and 110) are shown, multiple base stations and devices can be provided in network 101.

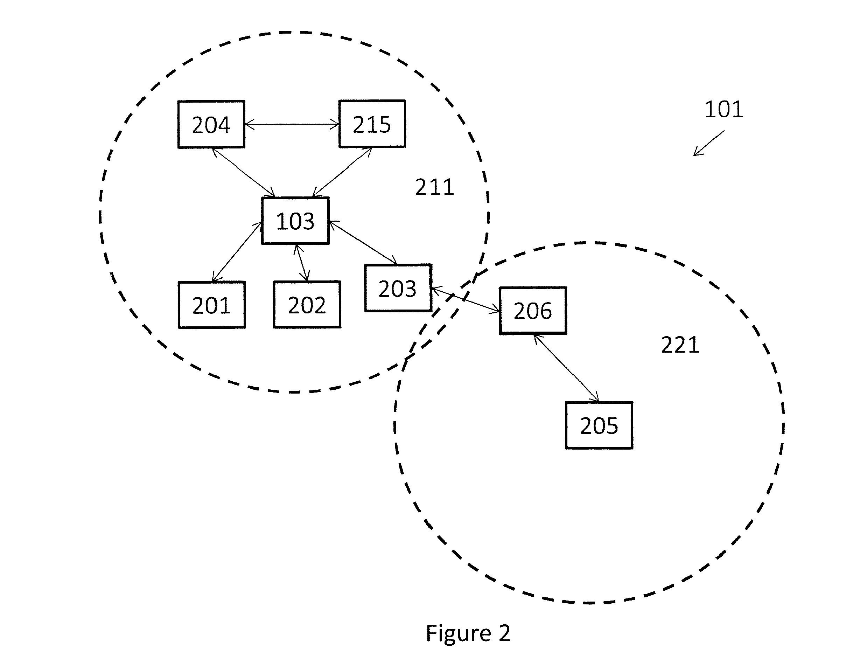

Figure 2 is a schematic block diagram showing device-to-device communication based on a cellular communication network such as that shown in figure 1. The cellular communication network 101 includes a first base station 103 and a second base station 205. First to third devices 201, 202, and 203 in a cell 211 of the first base station 103 can communicate via a typical access link (cellular link) of the first base station. Fourth and fifth devices 204 and 215 in the cell 111 of the first base station directly perform data transmission and reception with each other, not via the base station 103, and are thus operating in a D2D communication mode, which can be in additional to the normal operation of a device such that it is capable of cellular and data communication with the network at large.

A D2D link can be between devices having the same serving cell, but can also be between devices having different serving cells. For example, the third device 203 in the cell 211 of the first base station 103 can engage in D2D communication with a sixth terminal 206 in the cell 221 of the second base station 205 of network 101 and so on.

In order to set up a D2D communication link, a device must be aware of the presence (in radio coverage) of another device that it would like to communicate with. Accordingly, discovery occurs before communication is authorized and commences.

According to an example embodiment, direct discovery is a process by which two devices detect the "existence" and direct reachability of one another at the radio communications layer, and without the assistance of any intermediate transit node of the network.

There are different ways that potential direct communications peers can be discovered - targeted and non-targeted. According to an example embodiment, targeted discovery uses membership of a group/(authorized) use of an application to enable discovery and for a device to be discoverable. Accordingly, the party interested in discovering peers already knows how to identify the potential discovery targets and so aims to discover only these entities as part of a targeted discovery process

In the second type of discovery - non-targeted discovery - membership to a specific group/use of a specific application is not a requirement for discovery and for a device to be discoverable. Accordingly, the party interested in discovering peers will typically be interested in detecting any potentially available communications peers and discovering the services and communications possibilities that these offer. No particular application need is the trigger of this discovery (e.g. the user can trigger a generic discovery).

Targeted discovery can be particularly valuable in certain situations and for certain user, such as in the area of public safety (PS) for example. In such instances, a public safety agent may make use of targeted discovery to discover a PS relay. Other examples include:
A public safety agent discovering a peer agent device to send to him/her a video feed from his/her own device;
User of a specific application being discovered in the vicinity of the agent (determined by the allowed range);

In the case of non-targeted discovery, a party can discover any available direct communication peers nearby (determined by the allowed range), or discover a proximity services (ProSE) relay nearby (determined by the allowed range) for example. Other uses are possible, and the above are merely given as exemplary situations for targeted and non-targeted discovery.

As noted, targeted discovery can be regarded as "looking for members", in order to find out if any members of a specific potential application peer group are located in the vicinity of the interested party. That can be within the radio range of the device of the interested party, or within a user specified or predetermined range that can be within a certain radius of the user's device for example. The same can hold for non-targeted discovery, in which discovery can be done over the radio range of a device, or over a specified or predetermined range for example.

According to an example embodiment, for targeted discovery:
1) The discovering device is authorized to discover by the system;
2) Discoverable devices are authorized to participate in a discovery process;
3) Devices that initiate targeted discovery know how to address a group of discoverable devices, such as by using an identifier (Group ID) associated with a group of devices and relating to a specific device application; a discovery request can be addressed to the group of devices using the group identifier as an address for transmission of a discovery request for example;
4) Group membership can be validated by a secret key. Overlapping Group ID's can exist, but filtering can be operated via application layer shared secrets for example. According to an example embodiment, devices involved in targeted discovery can support a challenge/response method of mutual authentication of group members;
5) A device identity used for ProSE does not typically reveal the device subscriber identity. This identity can be resolvable to (or be the same as) a direct communications address for example. This identity is application independent, and is provided by 3GPP layer (e.g. at attach time and can be refreshed via MM procedures), or it can be configured in the device by the manufacturer or derived from the IMEI SV if no network is available for example;
6) The application layer identity of the user can be bound to a device ProSE identity (proximity services identifier) to determine interest for further communications, however this is not necessary for all possible applications.

It should be noted that there is no real logical difference in the logical sequence whether the device is in or outside network coverage, except for aspects related to dynamic group membership or dynamic authorization. Radio layer procedures may change.

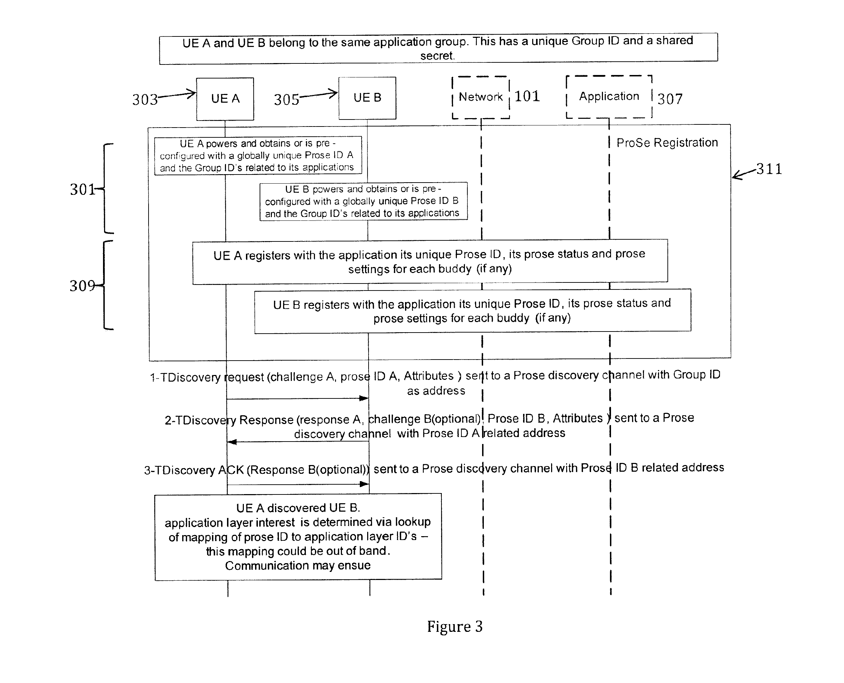

Figure 3 is a schematic diagram of an example message flow for a targeted discovery process between a pair of devices, UE A and UE B.

If the device is in network coverage, a proximity services identifier (Prose ID) is provided by the network, such as at attach time for example, and provides implicit authorization for proximity services. This may be renewed upon device or network request as part of the MM procedures. According to an example, a prose ID can be, for example, the telephone number associated with the device, or the device IMEI, such that the ID is a globally unique identifier for proximity services. Other alternatives are possible as will be appreciated.

Alternatively, a prose ID can be preconfigured for a device. That is, a device can have a pre-stored or pre-provided ID for example, so that network attachment is not required for obtaining the ID. This can be useful in situations where, for example, public safety officers need to initiate D2D communication when either they are not in network coverage, or when the network is down and so on.

It should be noted that for a device to be able to transmit on the broadcast channel for discovery under PLMN coverage, it has to obtain a scheduling grant from the network, thus implicitly authorizing the discovery in the coverage area where the device is located. When the network is absent, public safety devices are assumed to have authorization to discover and be discovered, if the application in question requests it.

For some applications, a Prose ID and device attributes exchanged in a targeted discovery phase may not be sufficient to enter into a proximity of interest relationship, such as when the network is not present and the prose ID cannot be associated securely to a application layer identity for example. Accordingly, the two entities may need to further gauge interest via application specific user plane interactions. Accordingly, the application layer interest may differ from the interest detected at the 3GPP layer.

According to an example embodiment, a device can include provision to disable responding to targeted discovery requests for a group, set of groups, or for all groups based on its user settings and on application status and settings in the device, or based on operator determined settings for example. A device can also include provision to limit or disable response to targeted discovery requests in a specific location, or from devices within a particular network cell for example. Similar considerations apply for the case of non-targeted discovery.

A challenge mechanism permits the device sending the challenge to determine whether the respondents belong to a specific group of interest and are trustworthy members of these groups. According to an example embodiment, the response to the challenge is a function of the ProSe ID of the respondent and the challenge itself. A device will typically not respond to a challenge more than once, so replay based attacks are extremely unlikely, if not possible because the challenging device will accept at most one response to a challenge.

At the end of the targeted discovery procedure the discovering device gains the discovered device prose ID and the device attributes for the group in question. Attributes can include whether the device can act as a ProSe relay for the specific application for example. This may then be used for direct communication.

Referring to figure 3, for a targeted discovery process, it can be assumed that the devices in question, UE A and UE B belong to the same application group, which has a unique identifier associated with it, and a shared secret. That is, the devices are associated with a specific group identifier relating to a device application. Any other devices that share the same identifier will also belong to the same application group, such devices therefore also using or being able to use the said application. A device can be associated with multiple groups.

At 301, devices UE A and UE B power on and obtain an identifier for proximity services from the network. That is, a prose ID is provided for the devices at attachment. Alternatively, as mentioned above, an identifier can be preconfigured for a device in the event that it there is a possibility that it is not in network coverage. The fact that there may be no network coverage is depicted in figure 3 by the provision of network 101 being depicted in broken lines. Optional process steps are thus depicted in broken line in figure 3 and in other figures.

At step 301, the devices 303, 305 are also provided with the Group IDs related to the applications that are installed and/or operable on the devices.

An application server 307, as part of network 101, can be used for application registration, such as is depicted in step 309 of figure 3 for devices 303, 305. At registration with the application server 307, such as via a user plane, devices 303, 305 provide their prose IDs and proximity services status as well as proximity services settings for any or each peer device that they are aware of, or that they may have discovered, connected with or communicated with in the past for example.

The above-noted steps broadly form a prose registration process 311. Following registration, a discovery process can proceed as depicted in figure 3. More specifically, at step 1, UE A transmits a discovery request using the Group ID as an address. The request includes a first proximity services identifier linked with UE A, and can be sent using a proximity services discovery channel of the devices.

At step 2, following receipt by UE B, a response is transmitted from UE B to UE A over the channel and using prose ID A as an address for the transmission, which is then acknowledged by UE A, using ID B as the address. As a result, UE A discovers UE B in a targeted fashion. More specifically, a broadcast using a Group ID as an address can enable a device that is a member of or which is otherwise associated with the group in question as a result of having an application installed or in use to discover other devices that are members of the group for the same reasons in a targeted manner. Communication between UE A and UE B can then ensue, as will be described in more detail below.

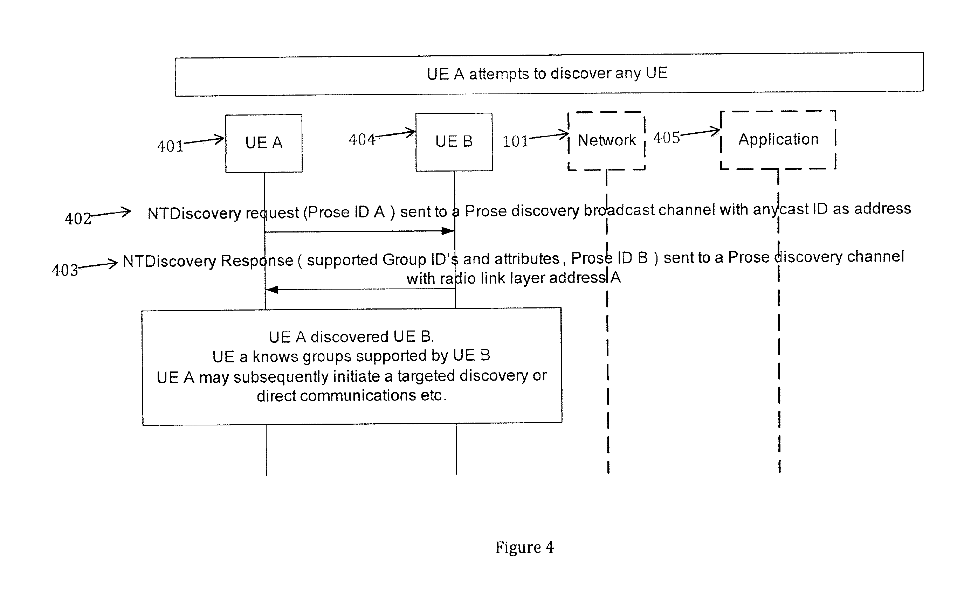

Figure 4 is a schematic diagram of an example message flow for a non-targeted discovery process between a pair of devices, UE A and UE B.

A transmission from a device under a non-targeted discovery protocol can be regarded as a "hello" type of message to find out what sort of potential application peers are in the vicinity of the device, such as in radio communication range for example. This can be followed by targeted discovery and/or direct communications as described above.

According to an example embodiment, non-targeted discovery presupposes that:
1) The discovering device is authorized to discover by the system;
2) The devices that can be discovered are authorized to participate in discovery;
3) The devices that initiate non-targeted discovery are just interested in discovering what is around;
4) There is no intent to authenticate or validate the information received in response as part of the discovery;
5) The device identity used for proximity services (Prose ID) does not reveal the device subscriber identity. This identity should be resolvable to (or be the same as) a direct communications address, and is application independent and provided by a 3GPP layer such as at attach time for example, and can be refreshed via MM procedures. Alternatively, it can be pre-configured or pre-provided in the device by the manufacturer or derived from the IMEI SV for example if no network is available, similarly the case of targeted discovery in the absence of network coverage;
6) The application and user settings and preferences determine whether the device responds to non-targeted discovery and if so revealing which application groups a device is willing to disclose.

According to an example embodiment, as devices are authorized to broadcast over the discovery channel under network coverage the operator can control proximity services usage by a device for discovery. A device may disable responding non-targeted discovery requests based on its user preferences or operator settings. At the end of the non-targeted discovery procedure the device gains the device prose ID, the disclosed group memberships and the device attributes for these groups. Attributes may include whether the UE can act as a ProSe relay for the specific application for example. This may then be used for subsequent targeted discovery or direct communication.

Referring to figure 4, the process is similar to that described with reference to figure 3. However, note that instead of using a Group ID as an address for a discovery request, the request from UE A 401 in step 402 is transmitted over the proximity services discovery broadcast channel with anycast ID as the address. A response sent from UE B 404 at step 403 is sent using the discovery broadcast channel with the radio link layer address of UE A as address. As noted above with reference to figure 3, the process can proceed with network 101 coverage, or without.

Accordingly, UE A 401 discovers UE B 404 and learns the groups supported by UE B 404. UE A 401 may subsequently initiate targeted discovery or direct communications.

Once two devices have discovered one another as described above, they can establish a peer-to-peer (p2p) link for direct transmission. According to an example embodiment, the process described below can operate when one or multiple devices are either in or out of network coverage. Operator and application level control in link establishment as well as data volume enforcement is also provided.

According to an example embodiment, establishment of a data link between entails instructing the entities involved (devices and, if in coverage, eNBs) on the terms of the communication establishment. This works both when the devices are under network coverage and outside network coverage, which can be useful in the Public safety case for example.

Under network coverage the eNBs involved in communication (the ones where the device enters in RRC connected state when it initiates the procedure) are involved in getting the communication authorized and set up.

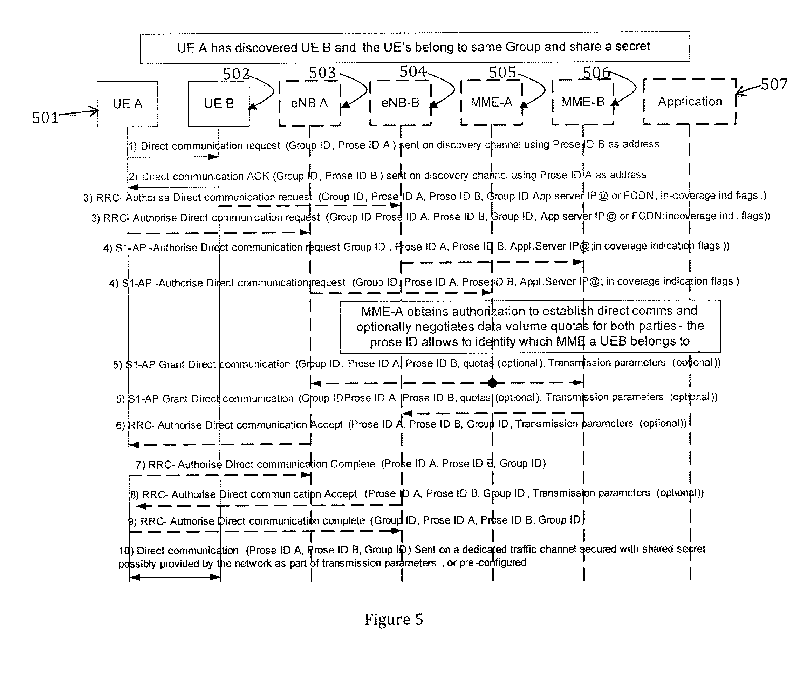

Figure 5 is a schematic diagram of an example message flow between a pair of devices, UE A 501 and UE B 502, their corresponding eNBs 503, 504 and MMEs 505, 506 and an application server 507 in the event that UE A has discovered UE B and the devices belong to the same group and share a secret.

Steps that can be omitted in the case that a network is not available are shown with reference to entities depicted in broken line. The device 501 initiating the communication in step 1 appears to its MME 505 as the device asking for communication authorization (possibly also at application level), using the ProSe IDs that are assigned by the network to the devices. For the eNB to be able to resolve the MME the device is homed to, the Prose ID typically implicitly identifies the MME the device is homed to.

The IP address or the name of the server where the MME needs to optionally check for application layer authorization and maybe obtain data volume quotas is provided by the device (another option is that the name of the application is resolved to the right IP address by the MME based on business agreements, solely based upon an agreed-upon Group ID for example). The application server 507 is assumed to have the current Prose ID available for the two devices 501, 502 available via a registration mechanism, such as that described above.

The "in coverage indication flags" indicate which of the two parties is in coverage. In the case depicted in figure 5, both devices notify the other that they are in coverage, so these flags are set to true or some other suitable value.

It should be noted that the message for communication authorization (step 4) includes the Prose ID of the initiator of the communication request and the prose ID of the 'called' party. The in coverage indication flags provide the network with information as to whether the called and calling party are in coverage.

In the message flow indicated in figure 5 and as previously noted, when both parties are in coverage, steps involving entities in dashed lines apply. Otherwise when the devices are out of network coverage steps involving entities in dashed lines do not apply.

The MME 505 of the calling party 501 is in charge of asking for authorization if the calling party is in coverage. Otherwise it will be the called party MME 506 that is operable to perform this step. When neither device is in coverage, no authorization step is taken, and local authorization for direct communication out of network coverage is assumed, such as in the case for public safety devices for example.

It should be noted that the MME 505 obtaining authorization from the application contacts the MME 506 of the other device 502 in case both devices are under network coverage.

Accordingly, MME-A 505 obtains authorization to establish direct communications and can optionally negotiate data volume quotas for both parties. For example, as noted at steps 5, 6 and 8 transmission parameters can be provided to provide a quota for data transmission volumes between communicating devices. In step 10, direct communication between 501 and 502 is provided. Data is sent between the devices on a dedicated channel, that can be secured using a shared secret using any known cryptographic technique for securing transmissions between parties. A shared secret can be provided by the network as part of the transmission parameters for example, or can be a pre-configured or pre-provided secret. In either case, the secret can be periodically refreshed for the parties to enable the ongoing security of the communications, as is typical.

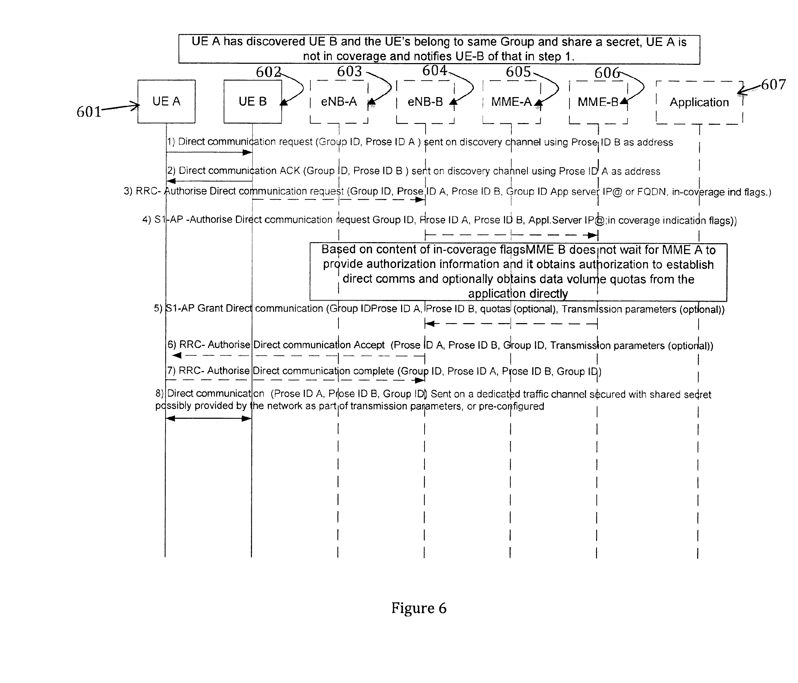

When the calling party device 501 is not under coverage, then MME 506 and eNB 504 of the called party (if different) are in charge of the request for authorization, as depicted in figure 6, which is a schematic diagram of an example message flow between a pair of devices, UE A 601 and UE B 602, their corresponding eNBs 603, 604 and MMEs 605, 606 and an application server 607 in the event that UE A has discovered UE B and the devices belong to the same group and share a secret, and where UE A is not in coverage.

Based on the content of the in-coverage flags, such as with reference to steps 3-6 for example, MME-B 606 does not wait for MME-A 605 to provide authorization information. Instead, it obtains authorization to establish direct communications and can optionally obtain data volume quotas from the application server 607 directly.

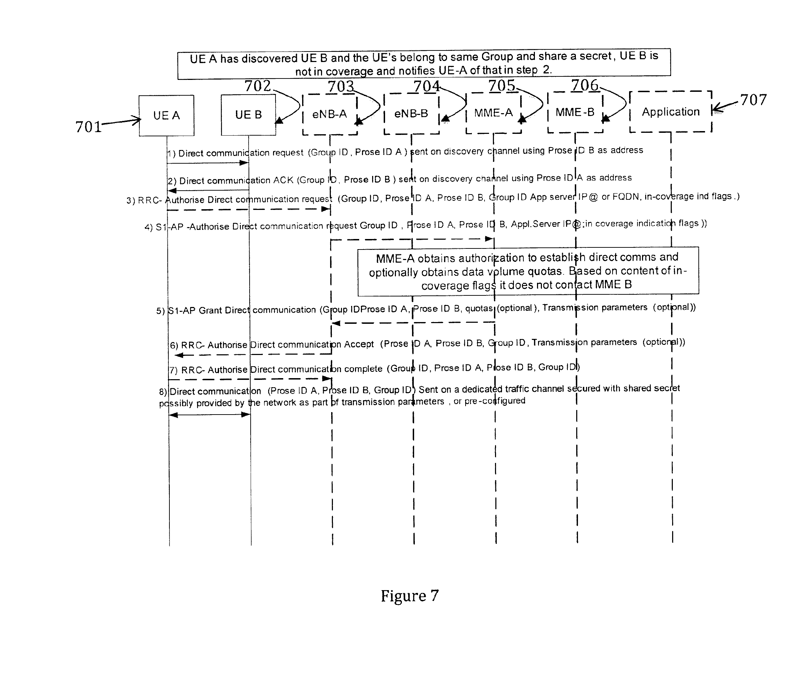

Conversely, when the calling party is in coverage, the MME and eNB of the calling party (if different) will be involved in communication authorization and set up, as depicted in figure 7, which is a schematic diagram of an example message flow between a pair of devices, UE A 701 and UE B 702, their corresponding eNBs 703, 704 and MMEs 705, 706 and an application server 707 in the event that UE A has discovered UE B and the devices belong to the same group and share a secret, and where UE B is not in coverage.

MME-A 705 obtains authorization to establish direct communications and can optionally obtain data volume quotas from the application server 707 directly. Based on the content of in-coverage flags, such as with reference to steps 3-6 for example, it does not contact MME-B 706.

As noted above, when two devices are finally authorized to communicate the eNB(s) receive from the MME(s) also optional transmission parameters configuration (including e.g. secret keys, frequencies, power ranges and so on). In the absence of network coverage this is assumed to be pre-configured in a device.

Furthermore, application layer encryption may be adopted if link layer encryption was not available outside network coverage. Some transmission parameters also apply to the eNB.

Referring to figure 5, at step 10 direct communications are started. During this phase the device 501 may act as a DHCP server for IP address assignment on the link, unless the device 502 acts as a relay, and the device 501 is not a relay, in which case the IP address may be assigned by the device 502. Also, throughout the procedures, the Radio network nodes may coordinate e.g. via X2 for optimal transmission.

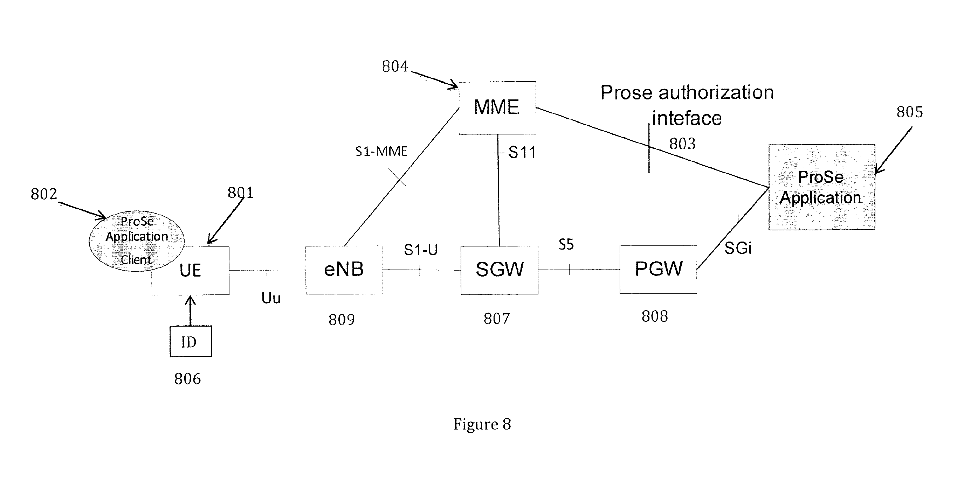

Figure 8 is a schematic diagram of an architecture for direct communications establishment.

A client device 801 includes a proximity services application 802. A proximity services identifier 806 is linked with device 801, either as a result of attachment of device 801 with a network, or because it the device has been pre-configured with the identifier, which is globally unique.

The user plane path to the application server is optional and is used primarily for application registration as discussed above. A prose authorization interface 803 is shown as a direct logical interface between MME 804 and the prose application 805, but in principle the S11-S5 path may mediate the application interaction via a PCRF Rx interface for example, which is an entity linked to the PGW via a Gx interface, and it is not shown in the figure for simplicity, but which can be found in specification TS 23.401 in Figure 4.2.1-1: "Non-roaming architecture for 3GPP accesses" for example.

MME (Mobility Management Entity) 804 is the control-node for the network, and is responsible for idle mode device tracking and paging procedures as is customary.

SGW (Serving Gateway) 807 routes and forwards user data packets, while also acting as the mobility anchor for the user plane during inter-eNB (809) handovers as is known.

PGW (PDN Gateway) 808 provides connectivity from the device 801 to external packet data networks by being the point of exit and entry of traffic for the device.

Thus, according to an example embodiment, the following steps can be taken in order to discover and communicate using a D2D communication link for a pair of devices, such as a first device and a second device:
1) Each device obtains at attach time to the network a ProSe ID if it is authorised to use ProSe services;
2) The ProSe ID uniquely indentifies the MME that the device is homed to - if the MME changes, the ProSe ID changes ;
3) A device application that needs to use ProSe registers or updates this ProSe ID with an Application server;
4) Each application is associated to a Group ID;
5) The Group ID is e.g. a string of characters of a maximum length;
6) Each Group ID is associated to an application layer Group Key which is used for security and authentication purposes;
7) Suitable radio link layer mechanisms exist to send discovery messages between devices. Any such mechanism (which may be of varying technique) can be used providing that they allow the transmission to all devices within radio coverage of the discovery messages content, and they permit the addressing of devices using either the ProSe ID or the Group ID if there is any need to restrict the receivers of the message;
8) There are two discovery procedures: a targeted discovery and a non targeted discovery;
9) Targeted discovery aims at discovering devices belonging to one application group, and a message may thus be broadcast to all devices in a Group. Devices within the group may announce themselves by responding;
10) Non targeted discovery aims at discovering which device groups are in the vicinity and is based on polling devices in order to allow them to announce the Group ID's of the groups that they belong to;
11) A device may disclose, in the discovery process, additional properties such as whether it can act as a Relay node;
12) The discovery process may be authenticated by a challenge/response method that is based on a shared security key for the group. When a device receives a challenge, the response is composed as a function of the challenge, the security key the device Prose ID advertised to the peer. One response to the challenge may be accepted by a given ProSe ID;
13) Once a device discovers devices in the same Application Group, it may decide to start a point to point communication with one (or more) of them. To do so, it sends (over the same channel as used for discovery) a direct communications request targeted to the ProSe ID of the candidate communications peer/device;
14) The target communications peer may respond by accepting or denying communications on the discovery channel. If communication is accepted then it is established on the user plane using transmission parameters that may be preconfigured if the device is out of network coverage (e.g. Power level, frequency bands, security keys). If the device is in network coverage, then a network controlled procedure is used to obtain authorization and also, optionally, the applicable transmission parameters;
15) As part of the authorization and setup process the application server may be contacted to authorize communication by the MME of the origination party, indicating the Prose ID of both parties (which the application server can resolve to the application ID's the device has associated to the ProSe ID's);
16) The MME can also provide the volume quotas the ENB's are allowed to provide for the direct transmission;
17) The originator of the communication may attempt to act as DHCP server for the communication link unless the other party is a relay and the originator is not a relay itself.

The present inventions may be embodied in other specific apparatus and/or methods. The described embodiments are to be considered in all respects as illustrative and not restrictive. In particular, the scope of the invention is indicated by the appended claims rather than by the description and figures herein. All changes that come within the meaning and range of equivalency of the claims are to be embraced within their scope.

## Claims

1. A method of device discovery for device-to-device communication in a telecommunication network, comprising:
transmitting, from a first device, a discovery request including a first proximity services identifier linked with the first device using a proximity services discovery channel for reception directly at a second device;
receiving at the first device over the proximity services discovery channel, directly from the second device, a response to the discovery request including a second proximity services identifier linked with the second device.

2. A method as claimed in claim 1, wherein a proximity services identifier linked with a device is provided to that device at the point of attach of the device to the telecommunication network, or is preconfigured for that device.

3. A method as claimed in any preceding claim, wherein the discovery request is addressed to a group of devices.

4. A method as claimed in claim 3, wherein the devices are associated with a specific group identifier relating to a device application.

5. A method as claimed in claim 3, wherein the devices are associated with multiple group identifiers relating to multiple device applications.

6. A method as claimed in any preceding claim, further comprising:
establishing a direct communication link between the first and second devices.

7. A method as claimed in any preceding claim, further comprising:
transmitting, from the first device, a device-to-device communication request including the first proximity services identifier and using the second proximity services identifier as an address for the request;
acknowledging the request of the first device by transmitting, from the second device, an acknowledgement including the second proximity services identifier to the first device using the first proximity services identifier as an address for the acknowledgement.

8. A method as claimed in claim 12, further comprising:
transmitting an authorization request for device-to-device communication from one or both of the first and second devices to a respective base station of the network associated with the device, the authorization request including data representing telecommunication network coverage of the devices.

9. A method as claimed in claim 8, further comprising:
transmitting the authorization request from the base station to a mobility management entity; and
authorizing device-to-device communication.

10. A method as claimed in claim 9, wherein authorizing device-to-device communication includes providing a set of transmission parameters to regulate the communication between the devices.

11. A method as claimed in claim 10, wherein the transmission parameters include cryptographic data for use by the devices to secure device-to-device communication, and/or data relating to a frequency and/or a power range or maximum power level of operation.

12. A method as claimed in 10 or 11, wherein the transmission parameters include data representing an allowed data volume quota for the device-to-device transmission.

13. A method for device-to-device communication in a telecommunication network, comprising:
discovering a set of potential peers in the network using a targeted or non-targeted detection process;
establishing a link with a device within the set in order perform a handshake to authorize device-to-device communication;
on the basis of the handshake, communicating directly with the device.

14. A user equipment device operable in accordance with the method as claimed in any preceding claim.

15. A computer program product, comprising a computer usable medium having computer readable program code embodied therein, said computer readable program code adapted to be executed to implement a method for device discovery for device-to-device communication in a telecommunication network as provided in any of claims 1 to 13.

## Amended claims

### Amended claims in accordance with Rule 137(2) EPC.

**1.** A method of device discovery for device-to-device communication in a telecommunication network, comprising:
transmitting, from a first device, a discovery request including a first proximity services identifier linked with the first device and a security key using a proximity services discovery channel for reception directly at a second device;
receiving at the first device over the proximity services discovery channel,
directly from the second device, a response to the discovery request including a second proximity services identifier linked with the second device;
wherein the security key is a shared security key for a group of devices, the group including the first device and the second device; and
wherein the response to the discovery request is composed as a function of the discovery request, the security key and the first proximity services identifier.

**2.** A method as claimed in claim 1, wherein a proximity services identifier linked with a device is provided to that device at the point of attach of the device to the telecommunication network, or is preconfigured for that device.

**3.** A method as claimed in any preceding claim, wherein the discovery request is addressed to the group of devices.

**4.** A method as claimed in claim 3, wherein the devices are associated with a specific group identifier relating to a device application.

**5.** A method as claimed in claim 3, wherein the devices are associated with multiple group identifiers relating to multiple device applications.

**6.** A method as claimed in any preceding claim, further comprising:
establishing a direct communication link between the first and second devices.

**7.** A method as claimed in any preceding claim, further comprising:
transmitting, from the first device, a device-to-device communication request including the first proximity services identifier and using the second proximity services identifier as an address for the request;
acknowledging the request of the first device by transmitting, from the second device, an acknowledgement including the second proximity services identifier to the first device using the first proximity services identifier as an address for the acknowledgement.

**8.** A method as claimed in any preceding claim, further comprising:
transmitting an authorization request for device-to-device communication from one or both of the first and second devices to a respective base station of the network associated with the device, the authorization request including data representing telecommunication network coverage of the devices.

**9.** A method as claimed in claim 8, further comprising:
transmitting the authorization request from the base station to a mobility management entity; and
authorizing device-to-device communication.

**10.** A method as claimed in claim 9, wherein authorizing device-to-device communication includes providing a set of transmission parameters to regulate the communication between the devices.

**11.** A method as claimed in claim 10, wherein the transmission parameters include cryptographic data for use by the devices to secure device-to-device communication, and/or data relating to a frequency and/or a power range or maximum power level of operation.

**12.** A method as claimed in 10 or 11, wherein the transmission parameters include data representing an allowed data volume quota for the device-to-device transmission.

**13.** A method for device-to-device communication in a telecommunication network, comprising:
discovering a set of potential peers in the network using a targeted or non-targeted detection process;
establishing a link with a device within the set in order perform a handshake to authorize device-to-device communication;
on the basis of the handshake, communicating directly with the device.

**14.** A user equipment device operable in accordance with the method as claimed in any preceding claim.

**15.** A computer program product, comprising a computer usable medium having computer readable program code embodied therein, said computer readable program code adapted to be executed to implement a method for device discovery for device-to-device communication in a telecommunication network as provided in any of claims 1 to 13.
